**Europäisches Patentamt**

**European Patent Office**

**Office européen des brevets**

(19)

(11) Veröffentlichungsnummer : **0 040 881**
**B1**

(12) # EUROPÄISCHE PATENTSCHRIFT

(45) Veröffentlichungstag der Patentschrift :
26.03.86

(51) Int. Cl.⁴ : $H\ 01\ C\ \ 7/10$, $C\ 04\ B\ 35/46$

(21) Anmeldenummer : 81200538.7

(22) Anmeldetag : 20.05.81

(54) Spannungsabhängiger Widerstand und Verfahren zu seiner Herstellung.

(30) Priorität : 24.05.80 DE 3019969

(43) Veröffentlichungstag der Anmeldung :
02.12.81 Patentblatt 81/48

(45) Bekanntmachung des Hinweises auf die Patenterteilung : 26.03.86 Patentblatt 86/13

(84) Benannte Vertragsstaaten :
**BE DE FR GB**

(56) Entgegenhaltungen :
US-A- 3 561 106
US-A- 3 594 616
US-A- 3 933 668
US-A- 4 158 219
US-A- 4 237 084
**CHEMICAL ABSTRACTS, Band 88, Nr. 8, 20. Februar 1978, Seite 454, Spalte 1, Nr. 57530u, Columbus, Ohio, USA**

(73) Patentinhaber : **Philips Patentverwaltung GmbH**
**Billstrasse 80**
**D-2000 Hamburg 28 (DE)**
**DE**
**N.V. Philips' Gloeilampenfabrieken**
**Groenewoudseweg 1**
**NL-5621 BA Eindhoven (NL)**
**BE FR GB**

(72) Erfinder : **Hennings, Detlev, Dr.**
**Hangstrasse 28**
**D-5100 Aachen (DE)**
Erfinder : **Schnell, Axel, Dr.**
**Schlossweiherstrasse 39**
**D-5100 Aachen (DE)**
Erfinder : **Schreinemacher, Herbert**
**Von-Coels-Strasse 354**
**D-5100 Aachen (DE)**

(74) Vertreter : **Nehmzow-David, Fritzi-Maria et al**
**Philips Patentverwaltung GmbH Billstrasse 80 Postfach 10 51 49**
**D-2000 Hamburg 28 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# 0 040 881

**Beschreibung**

Die Erfindung betrifft einen spannungsabhängigen Widerstand mit einem keramischen Sinterkörper auf Basis polykristallinen, mit einer geringen Menge eines Metalloxids zur Erzeugung einer N-Typ-Leitfähigkeit dotierten Strontiumtitanats mit auf einander gegenüberliegenden Flächen angebrachten Elektroden.

Die Erfindung betrifft weiter ein Verfahren zur Herstellung eines solchen Widerstandes.

Spannungsabhängige Widerstände (im folgenden als Varistoren bezeichnet) sind Widerstände, deren elektrische Leitfähigkeit bei konstanter Temperatur mit steigender Spannung sehr stark ansteigt. Dieses Verhalten kann durch die folgende Formel näherungsweise beschrieben werden

$$U = C \cdot I^\beta$$

worin bedeuten :

I = Strom durch den Varistor in Ampère

U = Spannungsabfall am Varistor in Volt

C = geometrieabhängige Konstante ; sie gibt die Spannung an bei I = 1 A. In praktischen Fällen kann sie Werte zwischen 15 und einigen tausend annehmen

$\beta$ = Stromindex, Nichtlinearitätskoeffizient oder Regelfaktor ; er ist materialabhängig und ist ein Maß für die Steilheit der Strom-Spannungs-Kennlinie.

Vorzugsweise soll der $\beta$-Wert so klein wie möglich sein, weil bei einem kleinen Wert für $\beta$ starke Stromänderungen nur zu kleinen Spannungsänderungen am Varistor führen. ·

Der C-Wert hängt ab vom Anwendungszweck des Varistors ; er bestimmt den Spannungswert, auf den begrenzt werden soll und es ist bevorzugt, einen keramischen Sinterkörper herzustellen, bei dem auf einfache Weise C-Werte innerhalb eines breiten Bereiches realisiert werden können.

Dies ist insbesondere möglich mit Sinterkörpern, bei denen die Nichtlinearität des Widerstandes auf dem Sinterkörper selbst innewohnenden Eigenschaften beruht ; der C-Wert kann hier gesteuert werden.

Bei Varistoren, welche Zinkoxid als Hauptkomponente und als Zusatzstoffe z. B. Wismut, Antimon, Mangan, Kobalt oder Chrom enthalten, beruht die Spannungsabhängigkeit z. B. auf den dem Sinterkörper selbst innewohnenden Eigenschaften. Dies ist, wie bereits dargetan, als Vorteil anzusehen. Ein Nachteil bei diesen Varistoren ist jedoch, daß bei der Herstellung des Sinterkörpers die Verwendung von flüchtigen Komponenten erforderlich ist.

Diese flüchtigen Komponenten verdampfen bei den zur Sinterung der keramischen Masse für den angestrebten Varistor erforderlichen hohen Temperaturen. Insbesondere die Flüchtigkeit von Wismutoxid wirkt sich störend aus und es ist daher schwierig, die keramische Masse bei einer Großserienproduktion ohne wesentliche Verluste derart zu sintern, daß Varistoren mit gleichbleibenden Eigenschaften hergestellt werden können. Ein weiterer Nachteil von Varistoren auf ZnO-Basis kann für gewisse Anwendungszwecke sein, daß bei konstanter Spannung die in ihnen maximal umsetzbare Leistung begrenzt wird durch einen mit steigender Temperatur zunehmenden Betriebsstrom, welcher zu einer zusätzlichen Erhitzung des Bauelementes führt.

Aus der US-PS 2 885 521 ist ein nicht-linearer Widerstand auf Basis von ferroelektrischem Barium-Titanat bekannt, wobei N-Leitfähigkeit bewirkende Dotierstoffe (Wismutoxid Antimonoxid oder Arsenoxid) in das Perowskitgitter des Titanats eingebaut sind. Dieser Widerstand erhält seine Eigenschaften als spannungsabhängiges Bauelement erst, wenn sich im Widerstandskörper nach Anlegen einer Spannung durch dielektrischen Durchbruch ein halbleitender Kanal ausgebildet hat. Das bekannte Material entspricht weitgehend einem PTC-Widerstand, wobei die Nichtlinearität dieses Widerstandes durch diese Bereiche unterschiedlichen elektrischen Leitungsverhaltens bewirkt wird. Der C-Wert kann hier nicht innerhalb eines breiten Bereiches variiert werden.

Aus US-PS 4 158 219 ist ein keramischer Kondensator auf Basis von $BaTiO_3$ bekannt, wobei dem Sinterkörper 1 bis 33 Vol.% $Pb_5Ge_3O_{11}$ als Sinterhilfsphase zur Erniedrigung der Sintertemperatur zugesetzt sind und wobei durch den $Pb_5Ge_3O_{11}$-Zusatz die elektrischen Eigenschaften des $BaTiO_3$ möglichst wenig modifiziert werden sollen.

Der Erfindung liegt die Aufgabe zugrunde, die genannten Nachteile zu umgehen und einen spannungsabhängigen Widerstand mit einem Sinterkörper zu schaffen, bei dem die Nichtlinearität des Widerstandes auf den dem Sinterkörper selbst innewohnenden Eigenschaften beruht, der relativ kleine Werte für den Nichtlinearitätsindex aufweist und der auf einfache Weise in normaler Atmosphäre ohne Verluste an dotierenden Komponenten gesintert werden kann und dessen C-Wert innerhalb eines breiten Bereiches variiert werden kann.

Diese Aufgabe wird erfindungsgemäß dadurch gelöst, daß der Sinterkörper einen geringen Anteil einer Bleigermanat-Phase der allgemeinen Zusammensetzung $(PbO)_x : (GeO_2)_y$ im molaren Verhältnis $x : y = 5 : 1$ bis $1 : 5$ enthält.

Die Bleigermanat-Phase baut infolge Bildung einer flüssigen Phase während der Sinterung eine dünne Isolierschicht an den Korngrenzen des polykristallinen halbleitenden Erdalkalimetalltitanats auf.

Ein Verfahren zur Herstellung eines spannungsabhängigen Widerstandes der obengenannten Art wird erfindungsgemäß so durchgeführt, daß folgende Verfahrensschritte ausgeführt werden :

2

a) Sintern eines polykristallinen Erdalkalimetalltitanats mit einem dotierend wirkenden Zusatz eines Metalloxids zur Erzeugung einer N-Typ-Leitfähigkeit in reduzierender Atmosphäre bei einer Temperatur im Bereich von 1 250 bis 1 400 °C, vorzugsweise 1 350 °C

b) Aufmahlen und Mischen des Sintergutes gemäß Schritt a) mit einer Bleigermanat-Phase der allgemeinen Zusammensetzung $(PbO)_x : (GeO_2)_y$ im molaren Verhältnis $x : y = 5 : 1$ bis $1 : 5$

c) Verpressen der Mischung gemäß Schritt b) zu für einen Widerstand geeigneten Formkörpern

d) Sintern der Formkörper gemäß Schritt c) unter Bildung von dünnen Isolierschichten aus der Bleigermanat-Phase an den Korngrenzen des polykristallinen halbleitenden Erdalkalimetalltitanats bei einer Temperatur im Bereich von 1 050 bis 1 350 °C, vorzugsweise 1 200 °C, an Luft und in Stickstoff

e) Aufbringen von Metallelektroden auf einander gegenüberliegenden Flächen des Sinterkörpers gemäß Schritt d).

Durch das Sintern in reduzierender Atmosphäre wird das $SrTiO_3$ durchgehend halbleitend gemacht und anschließend in hochohmigen $Pb_5Ge_3O_{11}$-Flüssigphasen gesintert. Der Varistor-Effekt in $(SrTiO_3/Bi_2WO_6) + Pb_5Ge_3O_{11}$ ist dann direkt vorhanden und muß nicht erst durch einen Formierprozeß induziert werden, wie es bei dem bekannten Widerstand gemäß US-PS 885 521 der Fall ist. Der Stromdurchgang erfolgt bei dem Widerstand gemäß der vorliegenden Erfindung im gesamten Volumen des Widerstandskörpers durch die halbleitenden Körner und die Korngrenzen, an denen die Bandstruktur durch das anliegende Potential so deformiert wird, daß die elektrische Leitfähigkeit stark verändert wird. Dieser Vorgang ist völlig reversibel und führt außerdem nicht zu statitischen Schwankungen des Stroms (Rauschen), welche in elektronischen Schaltungen unerwünscht sind. Diese statistischen Schwankungen des Stroms weist z. B. der bekannte Widerstand gemäß der US-PS auf.

Nach vorteilhaften Weiterbildungen der Erfindung sind das Erdalkalimetalltitanat Strontiumtitanat $SrTiO_3$ und das dotierende Metalloxid ein Oxid der Formel $(WO_3) \cdot (Bi_2O_3)_x$, wobei x im Bereich von 0,5 bis 3 liegt.

Insbesondere ist das dotierende Metalloxid $Bi_2WO_6$.

Nach einer bevorzugten Ausführungsform der Erfindung besteht der Sinterkörper aus 80 bis 90 Gew.% einer Mischung aus 98 Gew.% $SrTiO_3$ + 2 Gew.% $Bi_2WO_6$ und 10 bis 20 Gew.% $Pb_5Ge_3O_{11}$.

Ein besonders vorteilhaftes Verfahren zur Herstellung eines spannungsabhängigen Widerstandes der eingangs genannten Art ist gekennzeichnet durch die Verfahrensschritte

a) Sintern eines Gemenges aus 98 Gew.% $SrTiO_3$ einer mittleren Korngröße von 1 μm mit 2 Gew.% $Bi_2WO_6$ bei einer Temperatur von 1 350 °C in reduzierender Atmosphäre

b) Aufmahlen und Mischen des Sintergutes gemäß Schritt a) mit 10 bis 20 Gew.% Bleigermanat $Pb_5Ge_3O_{11}$

c) Verpressen der Mischung gemäß Schritt b) zu Tabletten eines Durchmessers von 6 mm und einer Dicke von 0,55 mm

d) Sintern der Formkörper gemäß Schritt c) bei einer Temperatur im Bereich von 1 200 bis 1 300 °C an Luft

e) Aufdampfen von CrNi-Au-Elektroden auf einander gegenüberliegenden Flächen des Sinterkörpers gemäß Schritt d).

Die Elektroden können in einem ohmschen Kontakt oder in einem nicht-ohmschen Kontakt mit dem Sinterkörper stehen und z. B. aus Gold, Silber, Kupfer, Aluminium, Indium, Nickel, Chrom oder Zinn bestehen. Die Eigenschaften des Varistors hängen im wesentlichen nicht von der Art des Elektrodenmetalls ab. Die Elektroden können aufgebracht werden durch Aufdampfen, Metallisieren mit einer Metallsuspension, elektrolystisches Plattieren, Kathodenzerstäubung oder ähnlichen bekannten Verfahren.

Die mit der Erfindung erzielten Vorteile bestehen insbesondere darin, daß durch die Bildung einer bei einer wesentlich tieferen als der Sintertemperatur des Strontiumtitanats liegenden Temperatur bereits eine schmelzflüssige Phase aus der Bleigermanat-Phase gebildet wird, die dem mit $Bi_2WO_6$ dotierten Strontiumtitanat zugesetzt wurde. Die Bleigermanat-Phase umschließt die einzelnen Titanat-Kristallite und verhindert ein Verdampfen der Wismut-Verbindung, bevor die hohen, für die Sinterung des Titanats erforderlichen Temperaturen überhaupt erreicht werden. Auf diese Weise ist es möglich, an Luft unter normalem Atmosphärendruck zu sintern, ohne daß Substanzverluste durch Verflüchtigung dotierender Komponenten auftreten. Dadurch können Varistoren mit reproduzierbar gleichbleibenden Eigenschaften erhalten werden.

Ein weiterer mit der Erfindung erzielter Vorteil besteht darin, daß die Temperaturabhängigkeit des Widerstandes bei konstanter Spannung durch die Zusammensetzung des Sinterkörpers und die Sintertemperatur sowohl positiv als auch negativ eingestellt werden kann.

Ein weiterer besonderer Vorteil der erfindungsgemäßen Widerstände ist, daß sie nicht nur die Spannungsabhängigkeit des Widerstandes zeigen, sondern aufgrund der an den Korngrenzen gebildeten Isolierschichten bei kleinen Spannungen wie Kondensatoren mit großer Kapazität wirken. Dieses Verhalten kann vorteilhaft zur kombinierten Über- und Störspannungsbegrenzung in der Gleichspannungsversorgung von elektronischen Schaltungen ausgenutzt werden. Dies gilt insbesondere für

**0 040 881**

Speicherschaltungen, deren Bauelemente einzeln gegen Über- und Störspannungen geschützt werden müssen

Anhand der Zeichnung werden Ausführungsbeispiele der Erfindung beschrieben und ihre Wirkungsweise erläutert.

Es zeigen

Figur 1a bis 1c  Widerstände gemäß der Erfindung im Schnitt,

Figur 2  Kennlinie des Strom-Spannungsverhaltens für einen Widerstand gemäß der Erfindung im Temperaturbereich von 24 °C bis 140 °C,

Figur 3  Kurve a : Temperaturabhängigkeit des Stromdurchganges bei einem Widerstand gemäß der Erfindung mit negativer Kennlinie, Kurve b : Temperaturabhängigkeit des Stromdurchganges bei einem Widerstand gemäß der Erfindung mit positiver Kennlinie,

Figur 4  Kennlinie des Stromdurchganges in Abhängigkeit von der elektrischen Feldstärke für einen Widerstand gemäß der Erfindung.

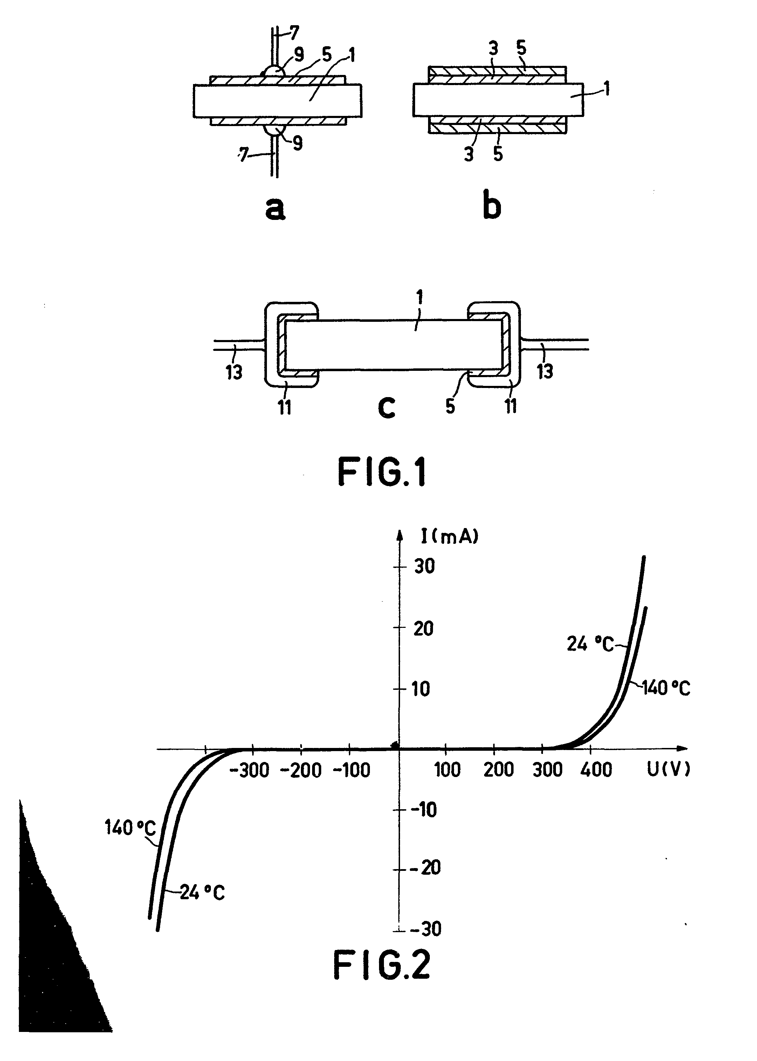

In den Fig. 1a bis 1c sind Widerstände gemäß der Erfindung in unterschiedlicher Formgebung im Schnitt dargestellt.

Ein Widerstand kann so ausgebildet sein (vgl. Fig. 1a), daß auf einem Widerstandskörper 1 aus Keramik, dessen Herstellung weiter unten beschrieben werden wird, auf einander gegenüberliegenden Flächen Metallschichten als Elektrodenschichten 5, z. B. aus Gold, angebracht werden. Auf den Elektrodenschichten 5 können anschließend elektrische Anschlußdrähte 7 durch z. B. Auflöten mit einem Lot 9 angebracht werden.

Der Widerstand kann jedoch auch als sogenanntes Chip-Bauelement direkt mit der Elektrodenschicht 5 auf z. B. eine Leiterplatte aufgelötet werden, ohne daß zusätzliche Anschlußdrähte angebracht werden (vgl. Fig. 1b).

Vorteilhafterweise kann der Widerstandskörper 1 zunächst auf einander gegenüberliegenden Flächen mit jeweils einer Haftschicht 3 aus für diese Zwecke bekannten Legierungen, z. B. aus Chromnickel, beschichtet werden, wonach auf den Haftschichten 3 jeweils eine weitere Metallschicht, z. B. aus Gold, als Elektrodenschicht 5 angebracht wird. Das Aufbringen der Haftschichten und der Elektrodenschichten kann z. B. durch Aufdampfen erfolgen.

Für die Ausführungsform von Widerständen gemäß den Fig. 1a oder 1b hat der Widerstandskörper 1 zweckmäßig eine plättchenförmige Konfiguration mit rundem oder rechteckigem Querschnitt.

Der Widerstandskörper kann jedoch auch zylinderförmig sein (vgl. Fig. 1c), wobei auf dem Zylindermantel die Elektrodenschicht 5, beispielsweise aus Gold auf bekannte Weise angebracht wird. Die elektrische Kontaktierung des Widerstandes erfolgt über an den Stirnseiten des Widerstandskörpers 1 angebrachte kappenförmige Elektroden 11 mit angeschweißten Anschlußdrähten 13.

Nachfolgend wird anhand einiger Beispiele die Herstellung eines spannungsabhängigen Widerstandes auf Basis eines N-dotierten Strontiumtitanats beschrieben.

1. Herstellung von $SrTiO_3$.

$SrTiO_3$ wird aus den Rohstoffen $SrCO_3$ und $TiO_2$ (chemische Qualität « rein ») durch zweistündiges Naß-Mischen in einer Achat-Kugelmühle und anschließendes fünfzehnstündiges Vorsintern bei 1 150 °C an Luft hergestellt. Danach wird das $SrTiO_3$ 1 h trocken in einer Achat-Kugelmühle vermahlen.

2. Herstellung der $Bi_2WO_6$-Phase.

$Bi_2O_3$ und $WO_3$ (chemische Qualität « pro analysi ») werden im molaren Verhältnis 1 : 1 2 h naß in einer Achat-Kugelmühle gemischt und dann zunächst 3 h bei 800 °C und anschließend 12 h bei 1 000 °C gebrannt. Das so erhaltene $Bi_2WO_6$ wird 1 h in einer Kugelmühle trocken vermahlen.

3. Herstellung des halbleitenden $SrTiO_3$-Pulvers.

$SrTiO_3$ und $Bi_2WO_6$ werden im Gewichtsverhältnis 98 : 2 in einer Achat-Kugelmühle 2 h naß gemischt und anschließend 4 h bei 1 350 °C in einer reduzierenden Atmosphäre, bestehend aus einem Gemisch von $N_2/H_2$ (Mischungsverhältnis 90 : 10) gebrannt. Nach dem Brennen wird das Pulver 2 h naß in einer Achat-Kugelmühle gemahlen.

4. Herstellung eines spannungsabhängigen Widerstandes.

Dem halbleitenden $SrTiO_3$-Pulver wird im Handel erhältliches Bleigermanat z. B. Bleigermanat $Pb_5Ge_3O_{11}$ der Firma Transelco, USA) in dem Mengenverhältnis a) 10 Gew.%, b) 15 Gew.%, c) 20 Gew.% zugegeben. Die Pulver werden 2 h naß in einer Achat-Kugelmühle gemischt und mit Hilfe eines Bindemittels (eine 10 %ige wässerige Polyvinylalkohol-Lösung) granuliert. Das Granulat wird zu Tabletten eines Durchmessers von 6 mm und einer Dicke von 0,55 mm auf eine grüne Dichte (Rohdichte) von ca. 55 bis 60 % verpreßt. Die Sinterung der Tabletten erfolgt an Luft 30 min lang bei einer Temperatur im Bereich von 1 200 bis 1 300 °C.

4

Alle auf diese Weise hergestellten Proben zeigen nach der Sinterung keine offene Porosität mehr. Als Elektroden werden auf der bereits genannten Haftschicht aus einer Chromnickel-Legierung Gold-Schichten z. B. durch Aufdampfen aufgebracht.

5. Elektrische Messungen.

Fig. 2 zeigt das Strom-Spannungs-Verhalten einer bei 1 200 °C gesinterten Probe mit 20 Gew.% $Pb_5Ge_3O_{11}$-Zusatz zur mit $Bi_2WO_6$-dotierten Strontiumtitanatphase für den Temperaturbereich von 24 °C bis 140 °C.

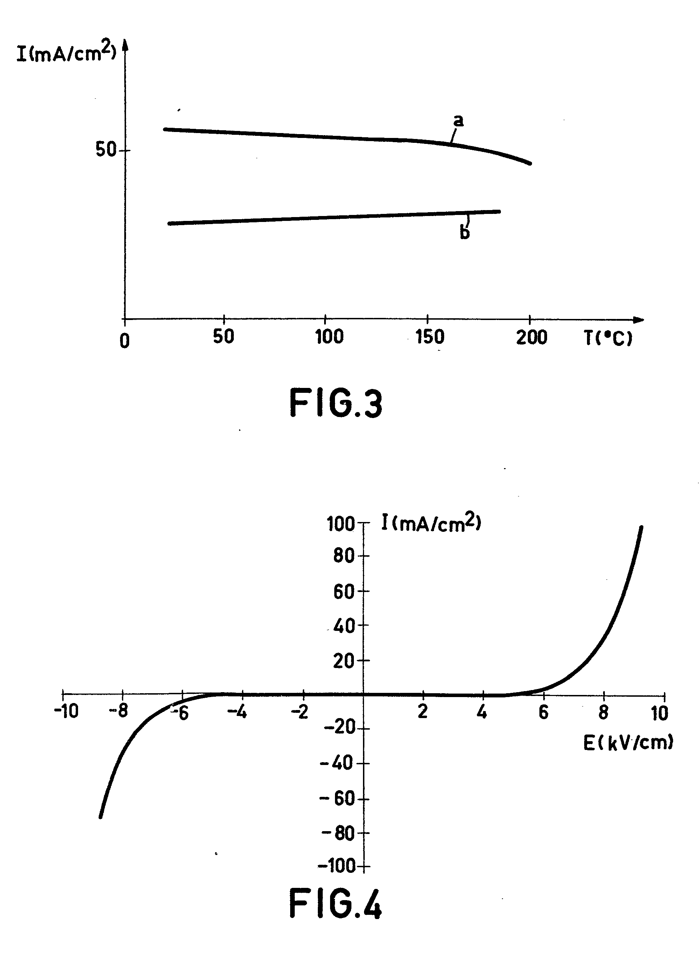

Der Stromdurchgang der spannungsabhängigen Widerstände gemäß der Erfindung kann in Abhängigkeit von der Temperatur sowohl eine negative Kennlinie (vgl. Fig. 3, Kurve a) als auch eine positive Kennlinie (vgl. Fig. 3, Kurve b) aufweisen. Kurve a wurde mit einem Sinterkörper erstellt, der bei 1 250 °C gesintert wurde und 10 Gew.% $Pb_5Ge_3O_{11}$ enthält. Kurve b wurde mit einem Sinterkörper erstellt, der bei 1 250 °C gesintert wurde und 15 Gew.% $Pb_5Ge_3O_{11}$ enthält.

Im Gegensatz zur Temperaturabhängigkeit von bekannten spannungsabhängigen Widerständen auf Basis von $TiO_2$, SiC oder ZnO ergibt eine höhere Temperatur bei konstant gehaltener Spannung einen leicht verringerten Strom bei Widerständen gemäß Fig. 3, Kurve a, so daß ein Selbstaufheizen der Widerstände unwahrscheinlicher ist als bei den bekannten Varistoren, die bei erhöhter Temperatur auch erhöhte Ströme fließen lassen.

Die nach dem vorliegenden Verfahren hergestellten Widerstände zeigen alle eine Strom-Spannungs-Charakteristik, die durch die Formel $U = C \cdot I^\beta$ beschrieben werden kann.

Die nachfolgende Tabelle gibt für mehrere, nach dem oben beschriebenen Verfahren hergestellte Ausführungsbeispiele die gemessenen Werte des Nichtlinearitätskoeffizienten β an. Die Stärke des elektrischen Feldes E wird in KV/cm angegeben, wobei durch die Probe ein Strom von 1 mA/cm² fließt. Die Materialkonstante C ist abhängig von der Probengeometrie ; sie wurde deshalb in der Tabelle ersetzt durch den Wert $E_{1\ mA}[KV/cm^2]$.

Tabelle

(für Proben von 5 mm Durchmesser und einer Dicke d von ~ 0,5 mm)

| Sintertemp. $T_S$ | 10 Gew% $Pb_5Ge_3O_{11}$ | | 15 Gew% $Pb_5Ge_3O_{11}$ | | 20 Gew% $Pb_5Ge_3O_{11}$ | |
|---|---|---|---|---|---|---|
| | $\beta$ | $E_{1\ mA}\left[\frac{KV}{cm}\right]$ | $\beta$ | $E_{1\ mA}\left[\frac{KV}{cm}\right]$ | $\beta$ | $E_{1\ mA}\left[\frac{KV}{cm}\right]$ |
| 1200°C | 0.099 | 8.11 | 0.122 | 6.7 | 0.133 | 6.5 |
| 1250°C | 0.101 | 8.78 | 0.123 | 7.04 | 0.121 | 7.61 |
| 1300°C | 0.109 | 8.83 | - | - | - | - |

Die Werte für den Nichtlinearitätsindex β für Varistoren des Standes der Technik betragen für SiC : β = 0,15 bis 0,35 ; $TiO_2$ : β = 0,1 bis 0,18 ; ZnO : β = < 0,03 (vgl. VALVO Handbuch « Spannungsabhängige Widerstände », 1978, Seite 10). Es zeigt sich damit, daß die Nichtlinearitätsindices β der Varistoren gemäß der Erfindung gleich gut bzw. besser sind, als z. B. die der bekannten Varistoren auf $TiO_2$- oder SiC-Basis. Auf die Nachteile von Varistoren auf ZnO-Basis wurde in der Beschreibungseinleitung bereits hingewiesen.

In Fig. 4 ist die Kennlinie des Stromdurchganges in Abhängigkeit von der elektrischen Feldstärke für einen Widerstand dargestellt, der einen bei 1 200 °C gesinterten Widerstandskörper mit 20 Gew.% $Pb_5Ge_3O_{11}$ hat.

**Patentansprüche**

1. Spannungsabhängiger Widerstand mit einem keramischen Sinterkörper auf Basis polykristallinen, mit einer geringen Menge eines Metalloxids zur Erzeugung einer N-Typ-Leitfähigkeit dotierten Strontiumtitanats mit aufeinander gegenüberliegenden Flächen angebrachten Elektroden, dadurch gekennzeichnet, daß der Sinterkörper einen geringen Anteil einer Bleigermanat-Phase der allgemeinen Zusammensetzung $(PbO)_x : (GeO_2)_y$ im molaren Verhältnis x : y = 5 : 1 bis 1 : 5 enthält.

2. Spannungsabhängiger Widerstand nach Anspruch 1, dadurch gekennzeichnet, daß der Sinterkörper einen geringen Anteil einer Bleigermanat-Phase der allgemeinen Zusammensetzung $(PbO)_x : (GeO_2)_y$ im molaren Verhältnis x : y = 5 : 1 bis 1 : 4 enthält.

5

3. Spannungsabhängiger Widerstand nach Anspruch 1, dadurch gekennzeichnet, daß der Sinterkörper einen geringen Anteil einer Bleigermanat-Phase der allgemeinen Zusammensetzung $(PbO)_x : (GeO_2)_y$ im molaren Verhältnis $x : y = 3 : 5$ bis $5 : 3$ enthält.

4. Spannungsabhängiger Widerstand nach Anspruch 1, dadurch gekennzeichnet, daß das dotierende Metalloxid ein Oxid der Formel $(WO)_3 \cdot (Bi_2O_3)_x$ ist, wobei x im Bereich von 0,5 bis 3 liegt.

5. Spannungsabhängiger Widerstand nach einem der vorhergehenden Ansprüche, dadurch gekennzeichnet, daß der Sinterkörper besteht aus
65 bis 95 Gew.% dotiertem Strontiumtitanat (90 bis 99,8 Gew.% $SrTiO_3$ + 0,2 bis 10 Gew.% $Bi_2WO_6$) und
5 bis 35 Gew.% $Pb_5 Ge_3O_{11}$.

6. Spannungsabhängiger Widerstand nach einem der vorhergehenden Ansprüche, dadurch gekennzeichnet, daß der Sinterkörper besteht aus
65 bis 90 Gew.% dotiertem Strontiumtitanat (90 bis 99,5 Gew.% $SrTiO_3$ + 0,5 bis 10 Gew.% $Bi_2WO_6$) und
10 bis 35 Gew.% $Pb_5Ge_3O_{11}$.

7. Spannungsabhängiger Widerstand nach einem der vorhergehenden Ansprüche, dadurch gekennzeichnet, daß der Sinterkörper besteht aus
80 bis 90 Gew.% dotiertem Strontiumtitanat (98 Gew.% $SrTiO_3$ + 2 Gew.% $Bi_2WO_6$) und
10 bis 20 Gew.% $Pb_5Ge_3O_{11}$.

8. Verfahren zur Herstellung des keramischen Sinterkörpers für einen spannungsabhängigen Widerstand nach einem der vorhergehenden Ansprüche, gekennzeichnet durch folgende Verfahrensschritte :
   a) Sintern polykristallinen Strontiumtitanats mit einem dotierend wirkenden Zusatz eines Metalloxids zur Erzeugung einer N-Typ-Leitfähigkeit in reduzierender Atmosphäre bei einer Temperatur im Bereich von 1 250 bis 1 400 °C, vorzugsweise 1 350 °C,
   b) Aufmahlen und Mischen des Sintergutes gemäß Schritt a) mit einer Bleigermanat-Phase der allgemeinen Zusammensetzung $(PbO)_x : (GeO_2)_y$ im molaren Verhältnis $x : y = 5 : 1$ bis $1 : 5$
   c) Verpressen der Mischung gemäß Schritt b) zu für einen Widerstand geeigneten Formkörper
   d) Sintern der Formkörper gemäß Schritt c) unter Bildung von dünnen Isolierschichten aus der Bleigermanat-Phase an den Korngrenzen des polykristallinen halbleitenden Strontiumtitanats bei einer Temperatur im Bereich von 1 050 bis 1 350 °C, vorzugsweise 1 200 °C, an Luft und in Stickstoff
   e) Aufbringen von Metallelektroden aufeinander gegenüberliegenden Flächen des Sinterkörpers gemäß Schritt d).

9. Verfahren nach Anspruch 8, gekennzeichnet durch folgende Verfahrensschritte :
   a) Sintern polykristallinen Strontiumtitanats mit einem dotierend wirkenden Zusatz eines Metalloxids zur Erzeugung einer N-Typ-Leitfähigkeit in reduzierender Atmosphäre bei einer Temperatur im Bereich von 1 200 bis 1 350 °C
   b) Aufmahlen und Mischen des Sintergutes gemäß Schritt a) mit einer Bleigermanat-Phase der allgemeinen Zusammensetzung $(PbO)_x : (GeO_2)_y$ im molaren Verhältnis $x : y = 5 : 1$ bis $1 : 4$
   c) Verpressen der Mischung gemäß Schritt b) zu für einen Widerstand geeigneten Formkörpern
   d) Sintern der Formkörper gemäß Schritt c) unter Bildung von dünnen Isolierschichten aus der Bleigermanat-Phase an den Korngrenzen des polykristallinen halbleitenden Strontiumtitanats bei einer Temperatur im Bereich von 1 150 bis 1 300 °C an Luft
   e) Aufbringen von Metallelektroden auf einander gegenüberliegenden Flächen des Sinterkörpers gemäß Schritt d).

10. Verfahren nach Anspruch 8, dadurch gekennzeichnet, daß das Strontiumtitanat durch Umsetzung von $SrCO_3$ mit $TiO_2$ im Verhältnis 1 : 1 nach Aufmahlen und Vorsintern 15 h bei 1 150 °C in Luft gebildet wird.

11. Verfahren nach Anspruch 8, dadurch gekennzeichnet, daß als dotierendes Metalloxid ein Oxid der Formel $(WO_3) \cdot (Bi_2O_3)_x$ eingesetzt wird, wobei x im Bereich von 0,5 bis 3 liegt.

12. Verfahren nach Anspruch 11, dadurch gekennzeichnet, daß als dotierendes Metalloxid $Bi_2WO_6$ eingesetzt wird.

13. Verfahren nach Anspruch 12, dadurch gekennzeichnet, daß das $Bi_2WO_6$ durch Umsetzung von $Bi_2O_3$ mit $WO_3$ im Verhältnis 1 : 1 nach Aufmahlen und Vorsintern zunächst 3 h bei 800 °C und anschließend 12 h bei 1 000 °C in Luft gebildet wird.

14. Verfahren nach Anspruch 8, gekennzeichnet durch die Verfahrensschritte
   a) Sintern eines Gemenges aus 90 bis 99,8 Gew.% $SrTiO_3$ einer mittleren Korngröße von 1 bis 2 μm mit 0,2 bis 10 Gew.% $Bi_2WO_6$ bei einer Temperatur im Bereich von 1 200 bis 1 350 °C in reduzierender Atmosphäre
   b) Aufmahlen und Mischen des Sintergutes gemäß Schritt a) mit 5 bis 35 Gew.% Bleigermanat $Pb_5Ge_3O_{11}$
   c) Verpressen der Mischung gemäß Schritt b) zu für einen Widerstand geeigneten Formkörpern
   d) Sintern der Formkörper gemäß Schritt c) bei einer Temperatur im Bereich von 1 150 bis 1 300 °C an Luft
   e) Aufbringen von Metallelektroden auf einander gegenüber liegenden Flächen des Sinterkörpers gemäß Schritt d).

15. Verfahren nach Anspruch 8, gekennzeichnet durch die Verfahrensschritte

a) Sintern eines Gemenges aus 98 Gew.% SrTiO₃ einer mittleren Korngröße von 1 μm mit 2 Gew.% Bi₂WO₆ bei einer Temperatur von 1 350 °C in reduzierender Atmosphäre

b) Aufmahlen und Mischen des Sintergutes gemäß Schritt a) mit 10 bis 20 Gew.% Bleigermanat Pb₅Ge₃O₁₁

c) Verpressen der Mischung gemäß Schritt b) zu Tabletten eines Durchmessers von 6 mm und einer Dicke von 0,55 mm

d) Sintern der Formkörper gemäß Schritt c) bei einer Temperatur im Bereich von 1 200 bis 1 300 °C an Luft

e) Aufdampfen von CrNi-Au-Elektroden auf einander gegenüber liegenden Flächen des Sinterkörpers gemäß Schritt d).

**Claims**

1. A voltage-dependent resistor having a ceramic sintered body on the basis of polycrystalline strontium titanate which has been doped with a small quantity of a metal oxide to produce an N-type conductivity, electrodes having been provided on opposed surfaces, characterized in that the sintered body comprises a minor quantity of a lead germanate phase which is defined by the general composition $(PbO)_x : (GeO_2)_y$ in the molar ratio $x : y = 5 : 1$ to $1 : 5$.

2. A voltage-dependent resistor as claimed in Claim 1, characterized in that the sintered body comprises a small proportion of a lead germanate phase which is defined by the general composition $(PbO)_x : (GeO_2)_y$ in the molar ratio $x : y = 5 : 1$ to $1 : 4$.

3. A voltage-dependent resistor as claimed in Claim 1, characterized in that the sintered body comprises a small proportion of a lead germanate phase which is defined by the general composition $(PbO)_x : (GeO_2)_y$ in the molar ratio $x : y = 3 : 5$ to $5 : 3$.

4. A voltage-dependent resistor as claimed in Claim 1, characterized in that the doping metal oxide is an oxide defined by the formula $(WO)_3 \cdot (Bi_2O_3)_x$, x being in the range from 0.5 to 3.

5. A voltage-dependent resistor as claimed in any one of the preceding Claims, characterized in that the sintered body consists of

65 to 95 % by weight of doped strontium titanate (90 to 99.8 % by weight of SrTiO₃ + 0.2 to 10 % by weight of Bi₂WO₆) and

5 to 35 % by weight of Pb₅Ge₃O₁₁.

6. A voltage-dependent resistor as claimed in anyone of the predecing Claims, characterized in that the sintered body consists of

65 to 90 % by weight of doped strontium titanate (90 to 99.5 % by weight of SrTiO₃ + 0.5 to 10 % by weight of Bi₂WO₆) and

10 to 35 % by weight of Pb₅Ge₃O₁₁.

7. A voltage-dependent resistor as claimed in any one of the preceding Claims, characterized in that the sintered body consists of

80 to 90 % by weight of doped strontium titanate (98 % by weight of SrTiO₃ + 2 % by weight of Bi₂WO₆) and

10 to 20 % by weight of Pb₅Ge₃O₁₁.

8. A method of producing the ceramic sintered body for a voltage-dependent resistor as claimed in any one of the preceding Claims, characterized by the following production steps :

a) sintering polycrystalline strontium titanate with a metal oxide additive which functions as a doping material to produce an N-type conductivity in a reducing atmosphere at a temperature in the range from 1 250 to 1 400 °C, preferably 1 350 °C,

b) milling and mixing of the sintered material obtained in accordance with step a) with a lead germanate phase of the general composition $(PbO)_x : (GeO_2)_y$ in the molar ratio $x : y = 5 : 1$ to $1 : 5$,

c) pressing the mixture obtained in accordance with step b) into preforms which are suitable for a resistor,

d) sintering the preforms obtained in accordance with step c) at a temperature in the range from 1 050 to 1 350 °C, preferably 1 200 °C, in air and nitrogen, thin insulating layers being formed from the lead germanate phase at the grain boundaries of the polycrystalline semicrystalline semiconducting strontium titanate,

e) providing facing planes of the sintered body obtained in accordance with step d) with metal electrodes.

9. A method as claimed in Claim 8, characterized by the following production steps :

a) sintering polycrystalline strontium titanate with a metal oxide additive which functions as a doping material to produce an N-type conductivity in a reducing atmosphere at a temperature in the range from 1 200 to 1 350 °C,

b) milling and mixing of the sintered material obtained in accordance with step a) with a lead germanate phase of the general composition $(PbO)_x : (GeO_2)_y$ in the molar ratio $x : y = 5 : 1$ to $1 : 4$,

c) pressing the mixture obtained in accordance with step b) into preforms which are suitable for a resistor,

d) sintering the preforms obtained in accordance with step c) at a temperature in the range from 1 150 to 1 300 °C, in air, thin insulating layers being formed from the lead germanate phase at the grain boundaries of the polycrystalline semiconducting strontium titanate,

e) providing facing planes of the sintered body obtained in accordance with step d) with metal electrodes.

10. A method as claimed in Claim 8, characterized in that the strontium titanate is formed by reacting $SrCO_3$ with $TiO_2$ in a ratio 1 : 1 after milling and presintering for 15 hours at 1 150 °C in air.

11. A method as claimed in Claim 8, characterized in that an oxide defined by the formula $(WO_3) \cdot (Bi_2O_3)_x$ is used as a doping metal oxide, x being in the range from 0.5 to 3.

12. A method as claimed in Claim 11, characterized in that $Bi_2WO_6$ is used as a doping metal oxide.

13. A method as claimed in Claim 12, characterized in that $Bi_2WO_6$ is formed by reacting $Bi_2O_3$ with $WO_3$ in a ratio 1 : 1 after milling and presintering first for 3 hours at 800 °C and thereafter for 12 hours at 1 000 °C, in air.

14. A method as claimed in Claim 8, characterized by the following production steps :

a) sintering a mixture consisting of 90 to 99.8 % by weight of $SrTiO_3$ having an average grain size of 1 to 2 μm and 0.2 to 10 % by weight of $Bi_2WO_6$ at a temperature in the range from 1 200 to 1 350 °C, in a reducing atmosphere,

b) milling and mixing the sintered material obtained in accordance with step a) with 5 to 35 % by weight of lead germanate $Pb_5Ge_3O_{11}$,

c) pressing the mixture obtained in accordance with step b) into preforms which are suitable for a resistor,

d) sintering the preforms obtained in accordance with step c) at a temperature in the range from 1 150 to 1 300 °C, in air,

e) providing facing planes of the sintered body obtained in accordance with step d) with metal electrodes.

15. A method as claimed in Claim 8, characterized by the following production steps :

a) sintering a mixture consisting of 98 % by weight of $SrTiO_3$ having an average grain size of 1 μm and 2 % by weight of $Bi_2WO_6$ at a temperature of 1 350 °C, in a reducing atmosphere,

b) milling and mixing the sintered material obtained in accordance with step a) with 5 to 20 % by weight of lead germanate $Pb_5Ge_3O_{11}$,

c) pressing the mixture obtained in accordance with step b) into tablets having a diameter of 6 mm and a thickness of 0.55 mm,

d) sintering the preforms obtained in accordance with step c) at a temperature in the range from 1 200 to 1 300 °C, in air,

e) providing facing planes of the sintered body obtained in accordance with step d) with CrNi-Au-electrodes by means of vapour deposition.

## Revendications

1. Résistance dépendant de la tension munie d'un corps fritté céramique à base de titanate de strontium polycristallin dopé à l'aide d'une petite quantité d'un oxyde métallique pour l'obtention d'une conductivité de type N comportant des électrodes appliquées sur des surfaces situées vis-à-vis l'une de l'autre, caractérisée en ce que le corps fritté contient une petite quantité d'une phase de germanate de plomb répondant à la composition générale $(PbO)_x : (GeO_2)_y$ dans le rapport molaire $x : y = 5 : 1$ à $1 : 5$.

2. Résistance dépendant de la tension selon la revendication 1, caractérisée en ce que le corps fritté contient une petite quantité d'une phase du germanate de plomb répondant à la formule générale $(PbO)_x : (GeO_2)_y$ dans le rapport molaire $x : y = 5 : 1$ à $1 : 4$.

3. Résistance dépendant à la tension selon la revendication 1, caractérisée en ce que le corps fritté contient une petite quantité d'une phase du germanate de plomb répondant à la composition générale $(PbO)_x : (GeO_2)_y$ dans le rapport molaire $x : y = 3 : 5$ à $5 : 3$.

4. Résistance dépendant de la tension selon la revendication 1, caractérisée en ce que l'oxyde métallique de dopage est un oxyde répondant à la formule $(WO)_3 \cdot (Bi_2O_3)_x$, x se trouvant dans la gamme comprise entre 0,5 à 3.

5. Résistance dépendant de la tension selon l'une des revendications précédentes, caractérisée en ce que le corps fritté est constitué par

65 à 95 % en poids de titanate de strontium dopé (90 à 99,8 % en poids de $SrTiO_3$ + 0.2 à 10 % en poids de $Bi_2WO_6$) et

5 à 35 % en poids de $Pb_5Ge_3O_{11}$.

6. Résistance dépendant de la tension selon l'une des revendications précédentes, caractérisé en ce que le corps fritté est constitué par

65 à 90 % en poids de titanate de strontium dopé (90 à 99,5 % en poids de $SrTiO_3$ + 0,5 à 10 % en poids de $Bi_2WO_6$) et

10 à 35 % en poids de $Pb_5Ge_3O_{11}$.

7. Résistance dépendant de la tension selon l'une des revendications précédentes, caractérisée en ce que le corps fritté est constitué par

80 à 90 % en poids de titanate de strontium dopé (98 % en poids de $SrTiO_3$ + 2 % en poids de $Bi_2WO_6$) et

10 à 20 % en poids de $Pb_5Ge_3O_{11}$.

8. Procédé pour la réalisation du corps fritté céramique pour une résistance dépendant de la tension selon l'une des revendications précédentes, caractérisé par les étapes de procédé suivantes :

a) frittage d'un titanate de métal alcalino-terreux polycristallin additionné d'un oxyde métallique qui fonctionne comme matériau de dopage pour l'obtention d'une conductivité de type N dans une atmosphère réductrice à une température située dans la gamme comprise entre 1 250 et 1 400 °C, de préférence 1 350 °C.

b) broyage et mélange du matériau fritté selon l'étape a) avec une phase de germanate de plomb de la composition générale $(PbO)_x : (GeO_2)_y$ dans le rapport molaire $x : y = 5 : 1$ à $1 : 5$.

c) pressage du mélange selon l'étape b) en un corps façonné approprié à une résistance

d) frittage du corps façonné selon l'étape c), avec formation de couches isolantes minces à partir de la phase de germanate de plomb aux limites des grains du titanate de métal alcalino-terreux semiconducteur polycristallin à une température située dans la gamme comprise entre 1 050 à 1 350 °C, de préférence 1 200 °C, à l'air et dans de l'azote.

e) applications d'électrodes métalliques sur des faces situées vis-à-vis du corps fritté selon l'étape d).

9. Procédé selon la revendication 8, caractérisé par les étapes de procédé suivantes :

a) frittage d'un titanate de strontrium polycristallin additionné d'un oxyde métallique qui fonctionne comme matériau de dopage pour l'obtention d'une conductivité de type N dans une atmosphère réductrice à une température située dans la gamme comprise entre 1 200 et 1 350 °C,

b) broyage et mélange du matériau fritté selon l'étape a) avec une phase de germanate de plomb de la composition générale $(PbO)_x : (GeO_2)_y$ dans le rapport molaire $x : y = 5 : 1$ à $1 : 4$.

c) pressage du mélange selon l'étape b) en un corps façonné approprié à une résistance

d) frittage du corps façonné selon l'étape c), avec formation de couches isolantes minces à partir de la phase de germanate de plomb aux limites des grains du titanate de strontium semiconducteur polycristallin à une température située dans la gamme comprise entre 1 150 à 1 300 °C à l'air

e) application d'électrodes métalliques sur des faces situées vis-à-vis du corps fritté selon l'étape d).

10. Procédé selon la revendication 8, caractérisé en ce que le titanate de strontium est formé par réaction de $SrCO_3$ avec $TiO_2$ dans le rapport $1 : 1$ après broyage et préfrittage pendant 15 heures à 1 150 °C à l'air.

11. Procédé selon la revendication 8, caractérisé en ce que comme oxyde métallique de dopage est utilisé un oxyde répondant à la formule $(WO_3) \cdot (Bi_2O_3)_x$, x étant situé dans la gamme comprise entre 0,5 à 3.

12. Procédé selon la revendication 11, caractérisé en ce que comme oxyde métallique de dopage est utilisé $Bi_2WO_6$.

13. Procédé selon la revendication 12, caractérisé en ce que le $Bi_2WO_6$ est formé par réaction de $Bi_2O_3$ avec $WO_3$ dans le rapport $1 : 1$ après broyage et préfrittage d'abord pendant 3 heures à 800 °C et puis pendant 12 heures à 1 000 °C dans l'air.

14. Procédé selon la revendication 8, caractérisé par les étapes de procédé suivantes :

a) frittage d'un mélange constitué par 90 à 99,8 % en poids de $SrTiO_3$ d'une grosseur des grains moyenne de 1 à 2 μm avec 0,2 à 10 % en poids de $Bi_2WO_6$ à une température située dans la gamme comprise entre 1 200 à 1 350 °C dans une atmosphère réductrice.

b) broyage et mélange du produit à fritter selon l'étape a) avec 5 à 35 % en poids de germanate de plomb $Pb_5Ge_3O_{11}$.

c) pressage du mélange selon l'étape b) en un corps façonné approprié à une résistance.

d) frittage du corps façonné selon l'étape c) à une température située dans la gamme comprise entre 1 150 et 1 300 °C à l'air.

e) application d'électrodes métalliques sur des faces situées vis-à-vis l'une de l'autre du corps fritté selon l'étape d).

15. Procédé selon la revendication 8, caractérisé par les étapes de procédé suivantes :

a) frittage d'un mélange constitué par 98 % en poids de $SrTiO_3$ d'une grosseur des grains moyenne de 1 μm avec 2 % en poids de $Bi_2WO_6$ à une température de 1 350 °C dans une atmosphère réductrice.

b) broyage et mélange du produit à fritter selon l'étape a) avec 10 à 20 % en poids de germanate de plomb $Pb_5Ge_3O_{11}$.

c) pressage du mélange selon l'étape b) en comprimés d'un diamètre de 6 mm et d'une épaisseur de 0,55 mm.

d) frittage du corps fritté selon l'étape c) à une température située dans la gamme comprise entre 1 200 et 1 300 °C à l'air.

e) application par évaporation d'électrodes en CrNi-Au sur des faces situées vis-à-vis l'une de l'autre du corps fritté selon l'étape d).

FIG.1

FIG.2

FIG.3

FIG.4

2